# EUROPÄISCHE PATENTSCHRIFT

(11) **EP 1 501 200 B1**
(45) Veröffentlichungstag und Bekanntmachung des Hinweises auf die Patenterteilung: **16.09.2009**
(21) Anmeldenummer: 04026906.0
(22) Anmeldetag: 12.11.2004
(51) Int. Cl.: H04B 1/10, H04R 25/00

(54) **Störsignalfilter in Hörgeräten**
Noise filter in a hearing aid
Filtre de bruit dans une prothèse auditive

(43) Veröffentlichungstag der Anmeldung: 26.01.2005
(73) Patentinhaber: PHONAK AG, 8712 Stäfa (CH)
(72) Erfinder: Roeck, Hans-Ueli, 8634 Hombrechtikon (CH); Menzl, Stefan Daniel, 8465 Jona (CH)
(74) Vertreter: Irniger, Ernst

(56) Entgegenhaltungen:
- EP-A- 0 843 427
- EP-A- 0 941 015
- EP-B- 1 104 645
- US-A- 6 137 888
- US-A1- 2004 053 575

## Beschreibung

Die vorliegende Erfindung betrifft ein Verfahren zum Filtern von Störsignalen mit weitgehendst bekannt gleich bleibender Wiederholfrequenz gemäss dem Oberbegriff nach Anspruch 1 sowie eine Anordnung zum Filtern von Störsignalen.

Die Filterung von beispielsweise HF-Signalen geschieht bei den aktuellen Hörgeräten ausschliesslich durch geeigneten Aufbau und passive HF-Filter. Damit soll erreicht werden, dass HF-Signale - wie sie z.B. von einem GSM-Mobiltelefon erzeugt werden - entweder gar nicht eingekoppelt werden und/oder durch die Filterstruktur von etwaigen Nichtlinearitäten innerhalb der Schaltung ferngehalten und somit nicht demoduliert werden.

Lösungen wie sie z.B. in US 6 205 190 (für CDMA, code division multiple access) oder in EP 0 876 717 (für GSM, Global System for Mobile communications) vorgeschlagen werden, agieren auf der Telefonseite, indem sie Abstrahlung vom amplitudenmodulierten (AM) Signalen verhindern oder zumindest reduzieren. Im Gegensatz dazu wird in EP 1 104 645 B1 eine Lösung präsentiert, welche direkt im Hörgerät realisiert ist. Bei dieser Lösung wird im Hörgerät zunächst die Frequenz des Störsignals bestimmt und anschliessend ein Kammfilter entsprechend dieser detektierten Frequenz so eingestellt, dass das Störsignal wirksam herausgefiltert wird. Damit eine möglichst starke Unterdrückung des Störsignals bei geringer Beeinträchtigung des Nutzsignals erreicht werden kann, müssen die Nullstellen des Kammfilters dabei genau auf die Harmonischen der detektierten Frequenz platziert werden. Um dies zu erzielen, wird die Systemtaktfrequenz des Hörgerätes von der Frequenz des Störsignals abgeleitet resp. an diese gekoppelt. In EP 0 941 015 A2 wird ebenfalls eine auf einem Kammfilter basierte Lösung vorgeschlagen, welche allerdings auf einem einstellbaren Verzögerungselement basiert. Damit in diesem Fall eine wirksame Unterdrückung des Störsignals bei geringer Beeinträchtigung des Nutzsignals resultiert, muss hier die Verzögerung sehr genau eingestellt werden. In US 6,137,888 wird ein "interference canceller" beschrieben. Dabei wird im Hörgerät ein Referenzsignal generiert, welches möglichst identische sein sollte mit dem Störsignal. Um nun das Audiosignal optimal vom Störsignal zu befreien, wird das Referenzsignal, also das geschätzte Störsignal vom Audiosignal subtrahiert, so dass im Wesentlichen das Nutzsignal übrig bleibt. Die Schwierigkeit bei diesem Verfahren liegt in der möglichst exakten Schätzung des Störsignals zur Erzeugung eines entsprechenden Nutzsignals. In der US 2004/0053575 A1 wird das Problem auf einfachere Weise angegangen. Mit Hilfe eines Hochfrequenzempfängers können elektromagnetische Störungen detektiert werden. Sobald der HF-Empfänger eine solche Störung detektiert hat, übermittelt er ein Steuersignal an ein Gerät, welches von diesem Störsignal betroffen sein könnte, welches darauf hin für die Dauer der Störung abgeschaltet wird. Alternativ wird dessen Lautsprecher kurzzeitig stumm geschaltet. Nachteil dieses Verfahren ist, dass die Detektion des Störsignals ausserhalb des Audiosignalpfades erfolgt. Dies könnte zur Folge haben, dass das Gerät ab- oder stumm geschaltet wird aufgrund einer Störung im HF-Bereich, welche gar keine Auswirkungen auf das Nutzsignal im Audiopfad hat und somit dieses unnötig eliminiert.

Die zunehmende Verschärfung der Anforderungen bezüglich Störfestigkeit führt zu immer aufwendigeren Filterstrukturen sowohl auf den integrierten Schaltkreisen (integrated circuit, IC) wie auch auf den PCBs (printed circuit board, Leiterplatte). Insbesondere die Forderung, mit einem Mobiltelefon telefonieren zu können, während das Hörgerät eingeschaltet ist, bringt grosse Schwierigkeiten mit sich. Der starke Sender des Mobiltelefons beispielsweise gemäss dem GSM Standard verwendet ein Zeitmultiplex (time division multiple access, TDMA) Schema mit einer Rahmenrate (frame rate) von ca. 213 Hz und einem Duty-cycle (Arbeitszyklus) des Frames von 1/8, 2/8 oder 4/8 (je nach verwendetem Protokoll).

Unter dem Duty-cycle wird derjenige zeitliche Anteil der Rahmendauer verstanden, während dessen signifikant Störenergie auf das Hörgerät einstrahlt. Diese durch das An- und Abschalten des Sendesignals verursachte Amplitudenmodulation der Abstrahlleistung wird durch die Litzen und Leiterbahnen auf der Leiterplatte im Hörgerät aufgefangen und an verschiedenen Stellen in das Hörgerät eingekoppelt. Besonders schwerwiegend sind die Einkopplungen in der Nähe des Mikrofons, weil dort einerseits die Signale sehr klein und andererseits die nachfolgende Verstärkung sehr gross ist. Filterstrukturen mit Ferrit-Bead oder RC-(resistor-capacitor)Filter auf den verschiedenen ICs, Hybriden oder PCBs sind aufwendig und machen die Schaltung gross.

Es ist daher eine Aufgabe der vorliegenden Erfindung, die Einkopplung der erwähnten Störsignale an Hörgeräten mindestens teilweise zu unterdrücken bzw. zu verhindern.

Erfindungsgemäss wird die gestellte Aufgabe mittels eines Verfahrens gemäss dem Wortlaut nach Anspruch 1 bzw. einer Anordnung gemäss dem Wortlaut nach Anspruch 10 gelöst.

Die Erfindung besteht nun darin, dass das Störsignal nicht im HF-Bereich gefiltert wird, sondern dass dessen Demodulation durch Nichtlinearitäten in Kauf genommen wird und die Störsignalkomponenten erst im Busisband entfernt werden. Dafür wird im digitalen Teil der Signalverarbeitung ein Detektor eingebaut, mittels welchem Signale mit bekannter Wiederholfrequenz sowie ggf. mit bekanntem Duty-cycle detektiert werden können. Beispielsweise kann es sich dabei um einen Detektor für GSM-Signale handeln. Detektiert dieser die typischen Frequenzmuster, wie beispielsweise GSM-Frequenzmuster, dann aktiviert er ein spezielles Filter, welches das Störsignal wenigstens teilweise entfernt.

Die Detektion der Signale, wie beispielsweise der GSM-Signale geschieht z.B. über den Duty-cycle und die Grundfrequenz des Störsignals. Liegt beispielsweise ein pulsierendes Signal mit einem Duty-cycle von 1/8, 2/8, oder 4/8 mit einer Grundfrequenz von ca. 213 Hz vor, dann kann davon ausgegangen werden, dass es sich um ein GSM-Signal handelt.

Mit anderen Worten, ist jeweils der Zeitpunkt der Störsignale genau bekannt, so kann direkt im jeweils bekannten Zeitbereich gearbeitet werden und die entsprechenden Abtastwerte können dynamisch adäquat gedämpft werden. D.h. wird ein erstes Pulspaket mit entsprechender Periodendauer und Duty-cycle detektiert, so wird die Annahmewahrscheinlichkeit eines Signals mit bekannter Frequenz, wie beispielsweise eines GSM-Signals, erhöht und nach einer weiteren Periodendauer präventiv das Signal zum vorzugsweise exakten Zeitpunkt des erwarteten nächsten Pulses um einen gewissen Betrag unterdrückt.

Wurde durch den Detektor tatsächlich ein weiterer Puls zu diesem Zeitpunkt detektiert, so steigt die Annahmewahrscheinlichkeit und zum Zeitpunkt des wiederum nächsten Pulses kann stärker unterdrückt werden. Derart wird ein vorteilhafter Kompromiss zwischen unnötiger dynamischer Signalabsenkung und optimaler Störgeräuschunterdrückung, wie beispielsweise GSM-Störgeräuschunterdrückung, erzielt. Nach einigen derart detektierten Pulsen wird die Annahmewahrscheinlichkeit auf nahezu 100% steigen. Damit wird die Unterdrückung zum jeweiligen Zeitpunkt des erwarteten nächsten Pulses, wie beispielsweise des GSM-Pulses, maximal eingestellt. Werden schliesslich keine Pulse mehr detektiert, so wird die dynamische Signalunterdrückung schnell auf 0 reduziert.

Die dynamische Unterdrückung des Signals ist derart, dass kurz vor dem erwarteten nächsten Puls das Audiosignal vorzugsweise sanft, d.h. nicht von einem Abtastwert zum nächsten sondern innert vorzugsweise einigen Millisekunden (0.5-10 ms), um die eingestellte Unterdrückung, wie z.B. 20 dB, im Falle eines GSM-Signals in der Amplitude, reduziert wird. Zu einem hinreichenden Zeitpunkt nach dem Puls, wie wiederum beispielsweise dem GSM-Puls, wird die Verstärkung des Signals wiederum vorzugsweise sanft auf die Originalverstärkung erhöht.

Die erfindungsgemäss vorgeschlagene Unterdrückung der Störimpulse ist insbesondere deshalb möglich, weil sich gezeigt hat, dass derart dynamische Signalunterdrückungen innert weniger Millisekunden, wie oben beschrieben, z.B. bei Sprachsignalen psychoakustisch nicht wahrnehmbar sind, d.h., das menschliche Gehirn füllt die Signallücke sinnvoll, d.h. vom vorhandenen Signal vorwärts und rückwärts extrapolierend, aus. Durch die Signallücke wird der dort sitzende Störimpuls, wie beispielsweise der GSM-Störimpuls, aber wirkungsvoll unterdrückt und daher auch nicht wahrgenommen.

Anhand der beigefügten Figuren soll das Prinzip der vorliegenden Erfindung kurz erläutert werden.

Dabei zeigen:
- Figur 1: der exemplarische Zeitverlauf eines Störimpulses, wie beispielsweise eines GSM-Impulses,
- Figur 2: ein vereinfachtes Blockdiagramm eines GSM-Signaldetektors, und
- Figur 3: ein vereinfachtes Blockdiagramm eines Hörgeräts mit einem GSM-Signaldetektor, welcher entweder auf die Verstärkung im DSP oder alternativ direkt auf das analoge Ausgangssignal einwirkt.

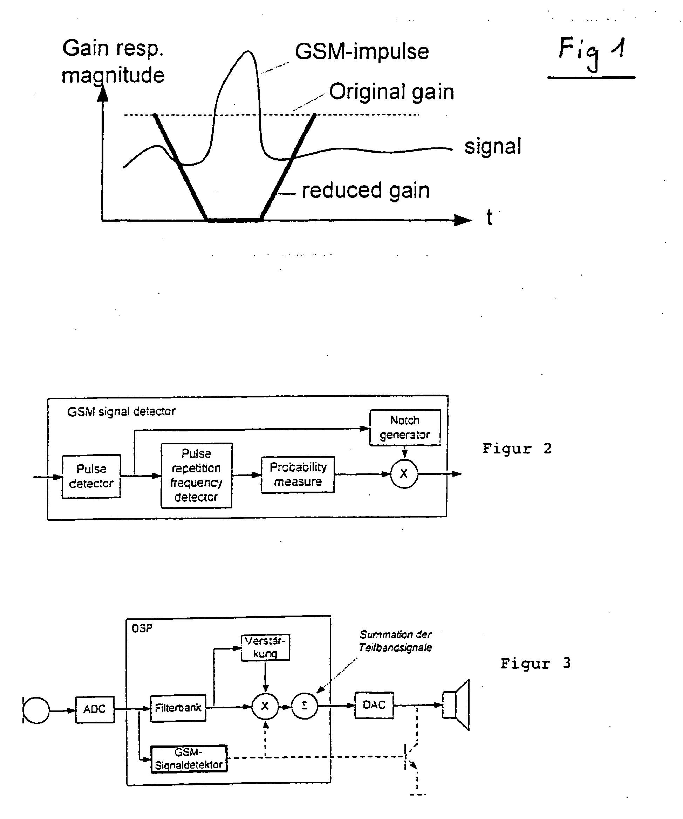

In der beigefügten Figur 1 ist schematisch ein Störimpuls, wie beispielsweise ein GSM-Impuls dargestellt. Anhand der bekannten detektierten Puls-Wiederholfrequenz sowie des Duty-cycles kann nun festgelegt werden, wann die Verstärkung des Originalsignals (original gain) abgesenkt werden muss, um den Störimpuls zu unterdrücken. Dabei erfolgt die Absenkung des Originalsignals, wie in Figur 1 dargestellt, nicht abrupt, sondern sanft und ebenso erfolgt der Anstieg der Verstärkung wiederum sanft. Die durch die dynamische Signalunterdrückung entstehende Lücke des Originalsignals im Millisekundenbereich ist, wie bereits oben erwähnt, für das menschliche Gehirn nicht erkennbar bzw. das menschliche Gehirn füllt die Signallücke sinnvoll aus, sodass keine Unterbrechung des Originalsignals wahrnehmbar ist.

In Figur 2 ist anhand eines vereinfachten Blockdiagramms ein GSM-Signaldetektor dargestellt. Dabei wird, wie bereits früher beschrieben, ein Signal detektiert wobei zunächst festgestellt wird, ob es sich z.B. um ein GSM-Signal handelt. Falls ein bekanntes Störsignal vorliegt, wird ein weiterer Puls zum nächsterwarteten Zeitpunkt detektiert, und falls tatsächlich ein weiterer Puls zu diesem Zeitpunkt auftritt, steigt die Annahme-Wahrscheinlichkeit, dass tatsächlich entsprechende Störimpulse vorliegen. Nun kann die Unterdrückung der Störimpulse ausgelöst werden, wie vorab unter Bezug auf Figur 1 beschrieben.

In Ergänzung zu den oben erwähnten Massnahmen sind weitere Massnahmen im Frequenzbereich vorstellbar: Die Störimpulse, wie beispielsweise GSM-Störimpulse, besitzen nach der Demodulation durch parasitäre Nichtlinearitäten ein charakteristisches Spektrum. Die Verstärkung in denjenigen Frequenzbändern, welche besonders stark vom Störsignal betroffen sind, werden gegenüber den weniger stark betroffenen Bändern wiederum dynamisch und sanft um einige dB abgesenkt, um nach dem Impuls wiederum entsprechend auf die Originalverstärkung angehoben zu werden.

Anstelle einer Verarbeitung im Frequenzbereich ist natürlich auch ein angepasstes Filter im Zeitbereich vorstellbar, welches eine spektral geformte Unterdrückung während der Zeitdauer des Störimpulses, wie beispielsweise des GSM-Störimpulses, vornimmt.

Obwohl die oben erwähnten Massnahmen und Vorschläge speziell im Zusammenhang mit GSM-Störimpulsen erwähnt sind, ist darauf hinzuweisen, dass das vorgestellte Verfahren bzw. die erfindungsgemässen Massnahmen sinngemäss auch für andere Störimpulse verwendet werden können. Voraussetzung ist selbstverständlich, dass die Störimpulse mit bekannt gleich bleibender Wiederholfrequenz auftreten und auch vorzugsweise der Duty-cyle bekannt ist. Speziell ist das erfindungsgemäss vorgestellte Verfahren auch für andere Mobiltelefonstandards anwendbar, wie für den in Nordamerika üblichen CDMA Standard, welcher eine andere Art Störung produziert. D.h. mit Hilfe eines geeigneten Detektors wird das Vorhandensein von charakteristischen Störgeräuschen bzw. Störsignalen detektiert und diese danach mit einem geeigneten Filter zeitlich und spektral dynamisch aus dem Audiosignal herausgefiltert. Weiterhin ist auszuführen, dass die Kenntnis der Wiederholfrequenz auch erst während dem Betrieb des Hörgerätes bestimmt werden kann, d.h. aufgrund einer Signalanalyse detektiert wird, dass ein bestimmtes Pulswiederholungsmuster nicht zu einem gewünschten Signal, sondern zu einem Störsignal gehört, und dementsprechend derart entfernt werden soll, so dass die Störung nicht mehr wahrnehmbar ist. Das Herausfiltern der Störimpulse kann dabei in Hörgeräten, wie schematisch in Figur 3 dargestellt, sowohl im digitalen Signalverarbeitungsbereich erfolgen unter Verwendung von digitalen Filtern, wie auch mittels analoger Filter, welche beispielsweise im Bereich zwischen der digitalen Signalverarbeitung (digital signal processsing, DSP) bzw. dem Digital/Analogwandler (digital/analog converter, DAC) und dem Lautsprecher angeordnet sind. Figur 3 zeigt ein vereinfachtes Blockdiagramm eines Hörgerätes mit einem GSM-Signaldetektor, welcher entweder auf die Verstärkung im DSP oder alternativ direkt auf das analoge Ausgangssignal einwirkt (hierbei steht ADC für analog/digital converter, Analog/Digital-Wandler).

Es wird darauf hingewiesen, dass die Störungen sowohl im Mikrofonpfad, wie auch z.B. in einer analogen oder digitalen, drahtgebundenen oder drahtlosen Übertragungsstrecke zwischen zwei Hörgeräten oder einem Hörgerät und einem weiteren Gerät in das Hörgerätesystem eingespiesen werden können, und die beschriebenen Massnahmen unabhängig vom Einspeisepunkt anwendbar sind.

Die vorgeschlagene Erfindung stellt eine bevorzugte Lösungsvariante zur Erhöhung der Störfestigkeit von Hörgeräten dar. Es ist selbstverständlich möglich, dass die erfindungsgemäss vorgeschlagenen Massnahmen alleine nicht ausreichend sind, doch ist es beispielsweise möglich im Zusammenspiel mit anderen typischen Massnahmen, wie beispielsweise Ferrit-Beads, RC-Filtern, etc. eine zusätzliche Störunterdrückung zu erzielen.

## Patentansprüche

1. Verfahren zur Unterdrückung von Störsignalen, auftretend mit weitgehendst bekannt gleich bleibender Wiederholfrequenz beim Gebrauch von Hörgeräten, wobei im digitalen Teil der Signalverarbeitung eines Hörgeräts basierend auf einem Signal, welches mindestens aus dem Audiosignalpfad abgeleitet wird, die Wiederholfrequenz des Störsignals detektiert wird und bei Erkennung bekannt gleich bleibender Wiederholfrequenz das Audiosignal mindestens zum erwartet nächsten Zeitpunkt der Wiederholung des Störsignals wenigstens teilweise unterdrückt bzw. gedämpft wird, **dadurch gekennzeichnet, dass** dies durch Absenken der Audiosignalamplitude erzielt mittels Änderung des Verstärkungsfaktors eines multiplikativ auf die Audiosignalamplitude wirkenden Verstärkerelements, wobei der Verstärkungsfaktor vor dem erwartet nächsten Zeitpunkt der Wiederholung des Störsignals innerhalb von 0.5-10 ms sanft reduziert wird und nach dem Störimpuls innerhalb von 0.5-10 ms sanft wieder auf die Originalverstärkung erhöht wird.

2. Verfahren nach Anspruch 1, **dadurch gekennzeichnet, dass** die Detektion über den Duty-cycle und/oder die Grundfrequenz des Störsignals erfolgt.

3. Verfahren nach einem der Ansprüche 1 und 2, **dadurch gekennzeichnet, dass** die Entscheidung ob ein sich regelmässig wiederholendes Signalmuster ein Störsignal darstellt, während dem Betrieb des Hörgerätes gefällt wird.

4. Verfahren nach einem der Ansprüche 1 bis 3, **dadurch gekennzeichnet, dass** zunächst ein Pulspaket mit entsprechender Periodendauer und Duty-cycle detektiert wird und nach einer weiteren erwarteten Periodendauer das Signal zum Zeitpunkt des erwarteten Pulses um einen gewissen Betrag unterdrückt und, falls tatsächlich zum erwarteten Zeitpunkt ein weiterer Puls detektiert wird, das Signal zum wiederum nächst erwarteten Puls noch stärker unterdrückt wird.

5. Verfahren nach einem der Ansprüche 1 bis 4, **dadurch gekennzeichnet, dass** bei Detektion keines Pulses die dynamische Signalunterdrückung auf 0 reduziert wird.

6. Verfahren nach einem der Ansprüche 1 bis 5, **dadurch gekennzeichnet, dass** die Signalunterdrückung im digitalen Signalverarbeitungsbereich eines Hörgerätes erfolgt.

7. Verfahren nach einem der Ansprüche 1 bis 6, **dadurch gekennzeichnet, dass** die Signalunterdrückung analog erfolgt, beispielsweise im Bereich zwischen eines Digital/Analog-Wandlers und dem Lautsprecher.

8. Verfahren nach einem der Ansprüche 1 bis 7, **dadurch gekennzeichnet, dass** die Signalunterdrückung sehr kurz, wie z. B. im Millisekundenbereich, erfolgt.

9. Anordnung zur Unterdrückung von Störsignalen an einem Hörgerät, **gekennzeichnet durch** einen Detektor zur Detektion der Störsignale mit weitgehendst bekannt gleich bleibender Wiederholfrequenz sowie **durch** eine dynamische Signalunterdrückung, welche mit dem Detektor wirkgekoppelt ist, wobei der Detektor im Bereich der digitalen Signalverarbeitung des Hörgerätes angeordnet ist und für die Detektion von Störsignalen mit weitgehendst bekannt gleich bleibender Wiederholfrequenz mindestens mit dem Audiosignalpfad verbunden ist, und wobei die dynamische Signalunterdrückung **durch** Absenken der Audiosignalamplitude erzielt wird mit Hilfe eines Verstärkerelements mit welchem das Audiosignal mit einem zeitlich variablen Verstärkungsfaktor multipliziert wird.

10. Anordnung nach Anspruch 9, **dadurch gekennzeichnet, dass** die dynamische Signalunterdrückung im Bereich der digitalen Signalverarbeitung des Hörgerätes angeordnet ist.

11. Anordnung nach Anspruch 9, **dadurch gekennzeichnet, dass** die dynamische Signalunterdrückung im Bereich vor dem Lautsprecher des Hörgerätes angeordnet ist.

12. Verwendung des Verfahrens nach einem der Ansprüche 1 bis 8 zum Unterdrücken von Störsignalen wie sie bei der Einstrahlung von Sendesignalen gemäss Mobiltelefonstandards, wie insbesondere dem GSM oder CDMA Standard entstehen.

## Claims

1. Method for suppressing interference signals occurring with approximately-known stable repetition rate during use of hearing devices, where the repetition rate of the interference signal is detected in the digital part of the signal processing of a hearing device based on a signal derived at least from the audio signal path, and where upon detection of a known stable repetition rate the audio signal is at least partially suppressed or attenuated at least at an expected next point in time of recurrence of the interference signal, **characterised in that** this is achieved by lowering the audio signal amplitude by means of changing the amplification factor of an amplification element acting multiplicatively on the audio signal amplitude, where the amplification factor is smoothly reduced within 0.5-10 ms before the next recurrence of the interference signal and smoothly increased again to the original amplification within 0.5-10 ms after the interference impulse.

2. Method according to claim 1, **characterised in that** the detection takes place via the duty-cycle and/or the fundamental frequency of the interference signal.

3. Method according to one of the claims 1 and 2, **characterised in that** the decision whether a periodically repeating signal pattern represents an interference signal is made during the operation of the hearing device.

4. Method according to one of the claims 1 to 3, **characterised in that** at first a pulse package with respective period duration and duty-cycle is detected and after a further expected period duration the signal at the point in time of the expected pulse is suppressed by a certain amount and if indeed at the expected point in time a further pulse is detected the signal at the again next expected pulse shall be suppressed even stronger.

5. Method according to one of the claims 1 to 4, **characterised in that** upon detection of no pulses the dynamic signal suppression shall be reduced to zero.

6. Method according to one of the claims 1 to 5, **characterised in that** the signal suppression takes place within the digital signal processing area of a hearing device.

7. Method according to one of the claims 1 to 6, **characterised in that** the signal suppression is effected in analogue for instance in the area between a digital/analogue converter and the loudspeaker.

8. Method according to one of the claims 1 to 7, **characterised in that** the signal suppression is very short as for instance in the millisecond range.

9. Arrangement for suppressing interference signals at a hearing device, **characterised by** a detector for detection of the interference signals with approximately-known stable repetition rate and by a dynamic signal suppression, which is operatively coupled with the detector, where the detector is arranged in the digital signal processing area of the hearing device, and which detector is connected to at least the audio signal path for the detection of interference signals with approximately-known stable repetition rate, and where the dynamic signal suppression is achieved by lowering the audio signal amplitude by means of an amplification element by which the audio signal is multiplied with a time-variant amplification factor.

10. Arrangement according to claim 9 **characterised in that** the dynamic signal suppression is arranged in the area of the digital signal processing of the hearing device.

11. Arrangement according to claim 9, **characterised in that** the dynamic signal suppression is arranged in the area before the loudspeaker of the hearing device.

12. Use of the method according to one of the claims 1 to 8 for suppressing interference signals as they may occur with the radiation of transmission signals according to mobile telephone standards such as particularly the GSM or CDMA standard.

## Revendications

1. Procédé pour affaiblir les signaux parasites qui apparaissent avec une fréquence de répétition dont on sait globalement qu'elle est constante, quand on utilise des prothèses auditives, selon lequel dans la partie numérique du traitement de signal d'une prothèse auditive, on détecte sur la base d'un signal dérivé au moins de la voie de signal audio la fréquence de répétition du signal parasite, et en cas de détection d'une fréquence de répétition dont on sait qu'elle est constante le signal audio est au moins en partie affaibli ou atténué au moins au moment attendu de la prochaine répétition du signal parasite,
**caractérisé en ce que** cela est obtenu grâce à une réduction de l'amplitude de signal audio, à l'aide d'une variation du facteur d'amplification d'un élément amplificateur qui agit par multiplication sur l'amplitude de signal audio, le facteur d'amplification étant réduit progressivement avant le moment attendu de la prochaine répétition du signal parasite à l'intérieur de 0,5-10 ms et étant augmenté progressivement après l'impulsion parasite à l'intérieur de 0,5-10 ms pour atteindre à nouveau l'amplification d'origine.

2. Procédé selon la revendication 1, **caractérisé en ce que** la détection se fait sur le cycle de fonctionnement et/ou sur la fréquence de base du signal parasite.

3. Procédé selon l'une des revendications 1 et 2, **caractérisé en ce que** la décision pour savoir si un modèle de signal qui se répète régulièrement constitue un signal parasite est prise pendant le fonctionnement de la prothèse auditive.

4. Procédé selon l'une des revendications 1 à 3, **caractérisé en ce qu'**un paquet d'impulsions d'une période et d'un cycle de fonctionnement correspondants est tout d'abord détecté, et après une autre période attendue, le signal est affaibli d'une certaine quantité au moment de l'impulsion attendue et, au cas où au moment attendu une autre impulsion est effectivement détectée, le signal est encore plus affaibli lors de l'impulsion attendue suivante.

5. Procédé selon l'une des revendications 1 à 4, **caractérisé en ce que** si aucune impulsion n'est détectée, l'affaiblissement dynamique de signal est réduit à 0.

6. Procédé selon l'une des revendications 1 à 5, **caractérisé en ce que** l'affaiblissement de signal se fait dans la zone numérique du traitement de signal d'une prothèse auditive.

7. Procédé selon l'une des revendications 1 à 6, **caractérisé en ce que** l'affaiblissement de signal se fait de manière analogique, par exemple dans la zone entre un convertisseur numérique/analogique et le haut-parleur.

8. Procédé selon l'une des revendications 1 à 7, **caractérisé en ce que** l'affaiblissement de signal est très court, comme par exemple de l'ordre de la milliseconde.

9. Dispositif pour affaiblir des signaux parasites sur une prothèse auditive, **caractérisé par** un détecteur pour la détection des signaux parasites avec une fréquence de répétition dont on sait globalement qu'elle est constante, et par un affaiblissement de signal dynamique dont l'action est couplée avec le détecteur, le détecteur étant disposé dans la zone du traitement de signal numérique de la prothèse auditive et étant relié, pour la détection de signaux auditifs avec une fréquence dont on sait globalement qu'elle est constante, au moins à la voie de signal audio, et l'affaiblissement de signal dynamique étant obtenu grâce à une réduction de l'amplitude de signal audio, à l'aide d'un élément amplificateur avec lequel le signal audio est multiplié par un facteur d'amplification variable dans le temps.

10. Dispositif selon la revendication 9, **caractérisé en ce que** l'affaiblissement de signal dynamique est prévu dans la zone du traitement de signal numérique de la prothèse auditive.

11. Dispositif selon la revendication 9, **caractérisé en ce que** l'affaiblissement de signal dynamique est prévu dans la zone située avant le haut-parleur de la prothèse auditive.

12. Utilisation du procédé selon l'une des revendications 1 à 8 pour affaiblir des signaux parasites tels qu'ils apparaissent lors de l'émission de signaux d'émission selon les normes de téléphonie mobile, en particulier GSM ou CDMA.
